# EUROPÄISCHE PATENTSCHRIFT

(11) **EP 2 963 199 B1**
(45) Veröffentlichungstag und Bekanntmachung des Hinweises auf die Patenterteilung: **07.04.2021**
(21) Anmeldenummer: 15173915.8
(22) Anmeldetag: 25.06.2015
(51) Int. Cl.: E04B 1/86, B32B 5/08, B32B 5/26, B32B 7/02, B32B 3/26, B32B 27/12, E04B 1/76, E04B 1/84

(54) **SCHALLDÄMMENDE PLATTE**
SOUND INSULATION PANEL
PLAQUE ISOLANTE

(30) Priorität: 01.07.2014 EP 14175248
(43) Veröffentlichungstag der Anmeldung: 06.01.2016
(73) Patentinhaber: akustik & innovation gmbh, 4612 Wangen b. Olten (CH); Sandler AG, 95126 Schwarzenbach/Saale (DE)
(72) Erfinder: MÄDER, Marco, 4612 Wangen bei Olten (CH)
(74) Vertreter: Liebetanz, Michael

(56) Entgegenhaltungen:
- EP-A2- 1 300 511
- DE-A1- 4 424 328

## Beschreibung

### TECHNISCHES GEBIET

Die vorliegende Erfindung betrifft eine schalldämmende Platte mit einer aus einem offenporig porösen Material gebildeten Absorptionsschicht gemäss dem Oberbegriff des Anspruchs 1 und ein Verfahren zu deren Herstellung.

### STAND DER TECHNIK

Aus der EP 2 394 265 ist ein akustischer Absorber sowie ein Verfahren zu dessen Herstellung bekannt. Dieser Absorber geht vom Wissen aus, dass offenporige poröse Materialien zur Schalldämmung bestens geeignet sind. Dabei wird unter offenporig verstanden, wenn der überwiegende Anteil der Hohlräume des Materials in Strömungsverbindung mit anderen Hohlräumen steht. Aufgrund des Absorptionsmechanismus von Schallwellen durch Reibung der Luftmoleküle an den Wänden der Hohlräume entsteht durch Umwandlung Wärme, was die Absorption von Schallwellen kürzerer Wellenlänge bevorzugt. Insofern stellt es sich diese EP 2 394 265 zum Ziel, auch bei tiefen Frequenzen eine hohe Absorption bereitzustellen. Dafür besteht das poröse Material aus mehreren Vlieslagen und diese Vlieslagen werden durch ein Bindemittel in Gestalt von Latex oder einem thermisch aktivierbaren Bindemittel miteinander verbunden. Der Absorber selber kann dabei, wenn er nur aus dem porösen Material besteht, eine Biegesteifigkeit im Bereich zwischen 200 und 400 Nm aufweisen.

Der Absorber gemäss der EP 2 394 265 ist ein Tieftonabsorber, der als Schwingungselement in einem Rahmen eingelegt ist. Er ist dabei freischwingend gelagert und biegeelastisch.

Andere Platten, die trotz schlechterer Eigenschaften als Schallschutz eingesetzt werden, werden zum Beispiel aus Holz hergestellt, dessen Mittelschicht mit diversen Bearbeitungen geöffnet wurde. Andere eingesetzte Materialien sind Glasblähplatten, Holzwollplatten, die aber ebenfalls instabil sind. Bei bekannten Holzplatten, die mit mikroperforierten Deckschichten versehen werden, sind nach Tests der Anmelder meistens 40 - 60 % der Löcher durch das Aufleimen dieser Deckschichten wieder geschlossen, da beim Holz nur diese Löcher offen bleiben, die genau auf einen Hohlraum am bearbeiteten Holz treffen.

Aus der US 2004/0069564 ist ein akustischer Absorber sowie ein Verfahren zu dessen Herstellung bekannt. Der Absorber weist eine Aussenschicht, eine schallabsorbierende Schicht und mehrere perforierte Schichten auf, welche mit der schallabsorbierenden Schicht verbunden sind. Die perforierten Schichten schliessen eine perforierte Strukturschicht und eine perforierte Substratschicht ein, welche eine strukturelle Steifigkeit und schalldämmende Wirkung bereitstellen. Die einzelnen Schichten sind miteinander gekoppelt, wobei die Kopplung mittels Klebe- oder Haftschichten realisiert wird.

Eine schalldämmende Platte mit einer aus einem offenporig porösen Material gebildeten Absorptionsschicht aus einer Faserplatte, die eine verpresste und zusammengebackene Fasermatte aufweist, wobei zumindest ein Teil der Fasern der Fasermatte aus kunststoffbeschichteten Schmelzfasern mit einem Faserkern und einem Fasermantel besteht und das Material des Faserkerns einen höheren Schmelzpunkt als das Material des Fasermantels aufweist, ist mit den Merkmalen des Oberbegriffs des Anspruchs 1 aus der EP 1 300 511 A2 bekannt, wobei die Platte eine Mischung aus Mineralfasern umfasst.

Weitere schalldämmende Platten mit einer aus einem porösen Material gebildeten Absorptionsschicht aus einer Faserplatte, die eine verpresste und zusammengebackene Fasermatte umfasst, sind aus der DE 44 24 328 A1, bei der die Dämmmatte durch Biko-Fasern verfestigt wird, der US 6,217,691 B1 aus einem Meltdown-Material, und der WO 2012/107 053 A1 mit einer Matte aus Blatt und Rohfasern, die durch Biko-Schmelzfasern verklebt werden, bekannt. Die DE 10 2009 007891 A1 zeigt Schallabsorber mit Einsatz eines mikroperforierten Elementes.

Viele der oben genannten schalldämmenden Platten basieren auf Mineralfaserplatten. Diese sind an sich stabil, aber nicht einfach bearbeitbar, da sie sehr spröde sind und damit anfällig. Sie werden vorzugsweise im Ausbau an Decken verwendet, finden aber als Raumteiler etc. keine Anwendung.

### DARSTELLUNG DER ERFINDUNG

Ausgehend von diesem Stand der Technik liegt der Erfindung die Aufgabe zugrunde eine schalldämmende Platte anzugeben, die selbsttragend und insbesondere für den Möbel- und Hausbau einsetzbar ist. Die Platten des Standes der Technik sind nicht selbsttragend, was sich daraus ergibt, dass jeweils Hinweise auf Rahmenstrukturen bestehen, in denen die schalldämmenden Platten einzusetzen sind.

Eine schalldämmende Platte mit einer aus einem offenporig porösen Material gebildeten Absorptionsschicht aus einer Faserplatte, die eine verpresste und zusammengebackene Fasermatte aufweist, wobei zumindest ein Teil der Fasern der Fasermatte aus kunststoffbeschichteten Schmelzfasern mit einem Faserkern und einem Fasermantel besteht und das Material des Faserkerns einen höheren Schmelzpunkt als das Material des Fasermantels aufweist, wobei die Faserplatte aus mindestens zwei Fasermatten besteht, wobei jede Fasermatte neben den besagten Schmelzfasern Matrixfasern aufweist, wobei die Schmelzfasern aus einem Kern aus PET und einem Mantel aus Co-PET bestehen, wobei die mindestens zwei Fasermatten zu einer Fasermatteneinheit zusammengesetzt sind, ist dann dadurch gekennzeichnet, dass die mindestens zwei Fasermatten jeweils ausschließlich aus einem thermoplastischen Kunststoff bestehen, bei dem es sich um PET handelt, dass die Matrixfasern aus PET bestehen und der Faseranteil der Matrixfasern zwischen 20 und 60 Gewichtsprozent beträgt, dass die Dicke der mindestens zwei Fasermatten in der Fasermatteneinheit jeweils zwischen 5 und 25 Millimeter liegt und dass die Dicke der zusammengesetzten Fasermatteneinheit zwischen 30 und 120 Millimeter beträgt, welche Fasermatteneinheit nach dem Verpress- und Backschritt auf eine Faserplatte zwischen 15 und 35 Millimeter Dicke gebracht ist.

Vorzugsweise beträgt der Faseranteil der Matrixfasern zwischen 25 und 40 Gewichtsprozent.

Die Faserplatte ist eine mehrlagige Faserplatte, die aus mindestens zwei, drei, vorzugsweise fünf und mehr, nach dem Zusammensetzen verpressten und zusammengebackenen Fasermatten besteht.

Jede Faserplatte kann aus einem einheitlichen Polymer bestehen, welche als mehrlagiger Aufbau mit unterschiedlichen Dicken und/oder unterschiedlichen Dichten zusammengesetzt werden und dann als mehrlagige Schicht verpresst und verbacken wird. Dadurch ergibt sich eine eigenstabile Struktur, die mechanisch bearbeitbar ist, wie beispielsweise durch Bohren zur Erzeugung von Löchern für die mechanische Verbindung. Die Platten des Standes der Technik weisen diese Eigenstabilität und die Bohrlochstabilität nicht auf. Neben den unterschiedlichen Dicken können auch mehrere gleich dicke Faserplatten verpresst werden. Dabei kann das Faserplattenmaterial identisch oder unterschiedlich sein, insbesndere eine unterschiedliche Dichte aufweisen. Die unterschiedliche Dichte kann durch unterschiedliche Faserwahl, z.B. aus den weiter unten genannten Materialien, oder eine erhöhte Präsenz von Schmelzfasern erreicht werden.

Das Verpressen und Zusammenbacken hat den Vorteil, dass keine zusätzlichen Kleb- oder Haftschichten benötigt werden, welche die Porosität der Schichten negativ beeinflusst, beispielsweise durch das Verschliessen der Poren. Kleb- oder Haftstoffe beinhalten meist Lösungsmittel, welche die Verwendung von gewissen Kunststoffen verhindert, da sie diese angreifen. Die enthaltenen Lösungsmittel sind oft auch noch nach längerer Zeit riechbar, was als störend empfunden wird.

Die Fasern der Fasermatten werden soweit erwärmt, dass sie beim Aneinanderdrücken aneinander haften bleiben und nach dem Abkühlen eine Verbindung bilden. Dies gilt sowohl für die Fasern innerhalb einer Fassermatte, sowie für Fasern von benachbarten Fasermatten. D.h. zwei Fasern, welche sich beim Verpressen und Zusammenbacken berühren können Fasern derselben Fasermatte sein, sie können jedoch auch von unterschiedlichen, zueinander benachbarten Fasermatten stammen.

Bevorzugt erfolgt die Erwärmung gleichmässig über die gesamte Fasermattendicke. Bei Kunststoffen liegt die die für das Haftenbleiben benötigte Temperatur in einem Bereich von 100 bis 240 Grad Celsius und ist von der verwendeten Kunststoffsorte abhängig. Eine gleichmässige Erwärmung der Fasermatte über ihre Gesamtdicke kann beispielsweise mittels Heissluft oder Mikrowellenstrahlung erzielt werden.

Gemäss der Erfindung weisen die Fasermatten zwei unterschiedliche Faserarten auf. Matrixfasern, welche für die Steifigkeit und Porosität verantwortlich sind und Schmelzfasern, welche für das Verbinden verantwortlich sind, wobei der Schmelzpunkt einer Schmelzfaser mindestens 10 Grad Celsius tiefer als der einer Matrixfaser ist.

Die Matrixfaser ist eine Polyethylenterephthalat (PET) - Faser beispielsweise mit einem Schmelzpunkt von ca. 250 Grad Celsius und einem groben Titer im Bereich von 12 bis 40 Dezitex. Der Faseranteil der Matrixfasern in einer Fasermatte beträgt zwischen 20 und 60 Gewichtsprozent, vorzugsweise zwischen 25 und 40 Gewichtsprozent.

Die Schmelzfaser ist eine Co-Polyethylenterephthalat (Co-PET)-Bikomponenten-Faser mit einer Kern-/Mantelstruktur, wobei der Kern aus PET und der Mantel aus Co-PET ist. Der Schmelzpunkt des Co-PET-Mantels liegt beispielsweise in einem Bereich von 120 bis 130 Grad Celsius und derjenige des PET-Kerns bei ca. 250 Grad Celsius. Vorzugsweise liegt der Titer der Schmelzfaser in einem Bereich von 2 bis 10 Dezitex, bevorzugt in einem Bereich von 3 bis 7 Dezitex.

Solche Fasermatten oder Vliesstoffe werden vorzugsweise durch ein Trockenverfahren, im Speziellen dem Kardier-/Kreuzleger-Verfahren hergestellt. Der Vliesherstellung kann eine Vliesverfestigung nachfolgen. Wird ein solcher Verfestigungsschritt ausgeführt, so geschieht dies vorteilhafterweise mittels einer thermischen Verfestigung, beispielsweise mittels Heissluft und/oder mittels einer mechanischen Verfestigung, beispielsweise mittels Nadeln. Derartige Vliesstoffe aus Stapelfasern haben beispielsweise ein spezifisches Gewicht von 1'000 Gramm pro Quadratmeter bei einer Dicke von 18 Millimeter und ein spezifisches Gewicht von 2'000 Gramm pro Quadratmeter bei einer Dicke von 25 Millimeter.

Mit anderen Worten, eine Verfestigung kann durch Nadelung des Materials erreicht werden.

Durch die Verwendung einer Kern-/Mantelstruktur der Schmelzfasern kann sichergestellt werden, dass sich das geschmolzene Mantelmaterial gleichmässig entlang der Kernkomponente verteilt und sich bevorzugt an Kreuzungsstellen mit anderen Fasern ablagert. Es ist darauf zu achten, dass die Schmelztemperatur des Kerns bzw. der Matrixfasern nicht überschritten wird, da sich sonst die Kernfasern bzw. die Matrixfasern deformieren und die Porosität der Fasermatte verloren geht.

Alternativ erfolgt die Erwärmung der Fasermatten derart, dass lediglich die oberflächennahen Fasern der Fasermatte über zumindest den Schmelzpunkt des Mantels der Schmelzfasern erwärmt werden. Beispielsweise kann eine Erwärmung an der Oberfläche durch eine die Oberfläche der Fasermatte kontaktierende Heizplatte realisiert sein. Eine kontaktlose Erwärmung der Oberfläche kann zum Beispiel mittels Wärmestrahler (Infrarot-Strahler) erreicht werden.

Alternativ oder Zusätzlich können Heizlanzen ins Innere einer Fasermatte eingeführt werden, um eine lokale Verschmelzung der Fasern über die Fasermattendicke hervorzurufen.

Die Stärke der Erwärmung ist durch die Art der Erwärmung, die Heizleistung und die Heizdauer einstellbar.

Die Dicken der einzelnen Fasermatten liegen zwischen 5 und 25 Millimeter und die Dicke der zusammengesetzten Fasermatteneinheit beträgt zwischen 30 und 120 Millimeter, welche nach dem Verpress- und Backschritt auf eine Faserplatte zwischen 15 und 35 Millimeter Dicke gebracht wird. Die Faserplatte kann auf einer oder beiden flächigen Seiten mit einer Beschichtung und/oder Belegung mit einem eine offene Oberfläche aufweisenden Material, wie insbesondere textilen Stoffen oder luftpermeablen Membranen und Platten, versehen sein, oder es kann ein mikroperforiertes Laminat vorgesehen sein, welches mikroperforierte Löcher aufweist.

Die Verbindung zwischen der Faserplatte und einer auf der Oberfläche der Faserplatte angeordnete Furnierplatte kann ebenfalls durch Verpressen und Zusammenbacken miteinander verbunden werden. Alternativ oder zusätzlich können Leimgewebe verwendet werden, welche begünstigen, dass die Poren der Faserplatten und Furnierplatten nicht verklebt werden.

Eine weitere Möglichkeit der Verbindung, ist das Aufbringen eines Klebstoffes auf die mit der Faserplatte zu verbindende Oberfläche der Furnierplatte, wobei die in der Furnierplatte vorhandenen Löcher vor dem Aufbringen des Klebstoffes abgedeckt werden. Somit ist sichergestellt, dass im Bereich der Löcher der Furnierplatte, die Poren der Faserplatte nicht verklebt werden.

Alternativ können die Furnierplatten erst mit einem Klebstoff beschichtet werden und anschliessend mit Löchern versehen werden. Somit ist ebenfalls gewährleistet, dass der Klebstoff nur in den Bereichen der Furnierplatten vorhanden ist, welche keine Löcher aufweisen.

Die Fasermatten können eine Abfolge von Matten mit verschiedener Dicke bilden. Das Verhältnis der Dicke der Abfolge von aufeinander liegenden unverpressten Fasermatten zur verfestigten Platte kann zwischen 4:1 und 2:1 betragen.

Hiermit wird eine stabile, hochabsorbierende Grundplatte angegeben, die ohne zusätzliche Bearbeitung und mit, -aber auch ohne gelochten Deckschichten eine sehr hohe Absorption aufweist.

Bei bekannten Stoffstellwände werden diese, die aus einer Füllung aus Schaumstoff bestehen und die zur Stabilität in einem Rahmen eingespannt sind, dann zur Optik mit Stoff bespannt, damit eine hohe Absorption, gute Optik und Stabilität erzielt werden kann. Diese nachteilige und den Einsatz beschränkende Rahmenkonstruktion kann mit der neuen Platte vermieden werden, denn diese hat alles in einem, eine höhere Eigenstabilität, eine Stoffbespannung ist nicht notwendig, so dass die Reinigung einfacher werden wird, wobei weiterhin eine hohe Absorption besteht.

Der Vorteil der erfindungsgemässen Platte liegt auch daran, dass die aus einem thermoplastischen Kunststoff bestehenden Fasermatten, hier aus Polyester, PET, durch die Bearbeitung und Überführung in den zusammengepressten Zustand selbsttragend auch für Möbelwände einsetzbar sind. Diese Platten können also angebohrt, verdübelt und anderweitig verarbeitet werden, so dass sie Spanplatten ersetzen können. Im Vergleich zu den Spanplatten weist eine erfindungsgemässe Faserplatte eine wesentlich höhere Schallabsorption auf. Die Verarbeitung bzw. die Bearbeitung einer erfindungsgemässen Faserplatte ist ähnlich zu der einer Spanplatte, d.h. sie kann beispielsweise gesägt, gefräst, geschliffen oder geschnitten werden.

Durch die Eigenstabilität einer erfindungsgemässen Faserplatte ist das Anbringen einer solchen Platte einfacher, da Befestigungslöcher, für die Anordnung von Befestigungsmitteln, wie beispielsweise Schrauben, Dübel, Nägel oder dergleichen, an jeder beliebigen Stelle der Faserplatte vorgesehen werden können. Die Befestigungslöcher können zum Beispiel vor Ort, d.h. direkt bei der Montage erzeugt werden. Erfindungsgemässe schalldämmende Platten sind vorzugsweise ebene Platten, es sind jedoch auch einfach- oder mehrfach gewölbte Platten denkbar, welche abgesehen von der/den Wölbungen gleich wie die ebenen Platten aufgebaut sind und hergestellt werden. Erfindungsgemässe schalldämmende Platten sind im Haus- und Möbelbau einsetzbar. Im Hausbau beispielsweise als selbsttragendes oder Verkleidungselement, beispielsweise als Stellwand, Raumteiler oder Tür-, Decken- oder Wandverkleidung. Im Möbelbau als selbsttragendes oder Verkleidungselement, beispielsweise als Schranktür oder als Schranktürverkleidung. Diese sind insbesondere mit den Verfahren einer Schreinerei bearbeitbar, also man kann in den schalldämmenden Platten bohren, die Kanten verleimen etc.. Dazu gehört auch das Einbringen von Mikroperforationen.

Weitere Ausführungsformen sind in den abhängigen Ansprüchen angegeben.

### KURZE BESCHREIBUNG DER ZEICHNUNGEN

Bevorzugte Ausführungsformen der Erfindung werden im Folgenden anhand der Zeichnungen beschrieben, die lediglich zur Erläuterung dienen und nicht einschränkend auszulegen sind. In den Zeichnungen zeigen:
- Fig. 1: eine perspektivische Darstellung einer schalldämmenden Platte gemäss einem Ausführungsbeispiel der Erfindung ;
- Fig. 2: eine perspektivische Darstellung der schalldämmenden Platte der Figur 1 vor dem Zusammenfügen der einzelnen Schichten;
- Fig. 3: eine schematische Darstellung der Verbindung einer Matrixfaser mit einer Schmelzfaser einer erfindungsgemässen schalldämmenden Platte; und
- Fig. 4: eine schematische Darstellung der Verbindung zweier Schmelzfasern einer schalldämmenden Platte (nicht gemäss der Erfindung).

### BESCHREIBUNG BEVORZUGTER AUSFÜHRUNGSFORMEN

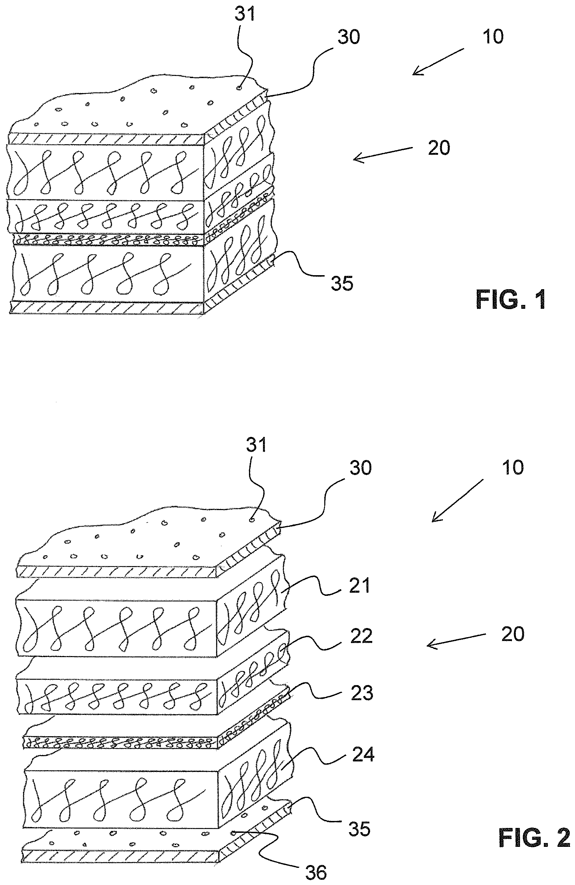

Eine schalldämmende Platte 10 gemäss einem Ausführungsbeispiel der Erfindung nach Figur 1 besteht aus einer mehrlagigen Faserplatte 20, wobei die Mehrlagigkeit im Folgenden ausgeführt werden wird.

Vorzugsweise ist die Faserplatte 20 mit einer ersten Abdeckplatte 30 belegt, welche ein Muster an mikroperforierten Löchern 31 aufweist. Bevorzugt ist auf der gegenüberliegenden Seite der Faserplatte 20, zur Vervollständigung der schalldämmenden Platte 10, eine zweite Abdeckplatte 35 vorgesehen. Auch diese zweite Abdeckplatte 35 weist ein Muster an mikroperforierten Löchern 36. Alle Löcher 31, 36 sind durchgehend und bilden somit einen durchgehenden Luftkanal zu der und in die Faserplatte 20.

Gemäss einer in den Zeichnungen nicht dargestellten Variante eines Ausführungsbeispiels der Erfindung ist die schalldämmende Platte nur durch die mehrlagige Faserplatte 20 an sich gebildet. Diese kann dann mit Beschichtungen und Belegungen durch offene Oberflächen wie textilen Stoffen, luftpermeablen Membranen und Platten kombiniert werden, die an Stelle der ersten und oder zweiten Abdeckplatte 30 beziehungsweise 35 treten.

Bei einer bevorzugten Ausführungsform ist die mehrlagige Faserplatte 20 mit mikroperforierten Laminat belegt, welches mikroperforierte Löcher 31, 36 ähnlich zur Figur 1 aufweist.

Der Vorteil der schalldämmenden Platte als Kombination mehrerer Faserplatten liegt in der erreichten Eigenstabilität. Die Platte kann im Gegensatz zum Stand der Technik als freistehendes, tragendes Element verwendet werden und ist zugleich hoch schallabsorbierend. Dies wird erreicht durch den Einsatz von einer Vielzahl einzeln eher weichen und unstabilen Fasermatten 21, 22, 23, 24, die dabei Dicken von 5, 10, 15, 20 oder 25 mm aufweisen können und im unverpressten Zustand eine Gesamtdicke von bis zu 30 / 40 / 60 Millimeter aufweisen, auf (beispielsweise) eine Gesamtdicke von 15/19/20/ 25 Millimeter verpresst und zusammen gebacken werden. Diese gefertigte Platte ist dann eigenstabil und benötigt keine weiteren Versteifungen wie Rahmen z.B. für eine Stellwand.

Dabei werden mehrere, insbesondere zwei, drei bis zu fünf oder mehr Matten von beispielsweise einer Dicke von jeweils 5, 10, 15, 20 oder 25 Millimetern eingesetzt. Es ist auch möglich Fasermatten verschiedener Dicke zu verbinden, beispielsweise kann eine Abfolge von fünf Fasermatten von 5 Millimeter Dicke, 20 Millimeter Dicke, 10 Millimeter Dicke, 20 Millimeter Dicke und schliesslich 5 Millimeter Dicke, also insgesamt 60 Millimeter Dicke auf eine gefestigte Platte von 20 Millimeter Dicke verpresst werden.

Die zentrale Faserplatte 20 besteht dabei aus einer Mehrzahl von Polyester-Faserplatten 21, 22, 23, 24, die mit hoher Temperatur und unter hohem Drück zusammengebacken werden. Typische Werte für anwendbare Temperaturbereiche hängen vom Polyestermaterial ab und können zwischen 100 und 240 Grad Celsius liegen. Geeignete Drücke sind zwischen 4 und 6 bar.

Durch die Einwirkung der Wärme verbinden sich die einzelnen sich berührenden Fasern untereinander. Dies gilt für Fasern innerhalb einer Platte, sowie für Fasern von benachbarten Platten

Die so hergestellten Platten 20 können dann mit gelochten Deckschichten 30 und 35, wie Laminat, Furnier, Metall usw. zu furnierten Platten als kompakte Endprodukte und eigenstabilen Akustikplatten hergestellt werden.

Die Figur 2 zeigt den Aufbau einer erfindungsgemässen schalldämmungsplatte vor dem Verpressen und Zusammenbacken, wobei die Faserplatte 20 eine Vielzahl von Faservliesen 21, 22, 23, 24 aufweist. Die einzelnen Faservliese weisen das gleiche Material auf, können jedoch unterschiedliche Vliesdicken und/oder unterschiedlichen Faserdicken aufweisen.

Durch die unterschiedliche Ausgestaltung der Vliesdicken und/oder der Faserdicken lassen sich die mechanischen, sowie die schalldämmenden Eigenschaften der Schalldämmungsplatte beeinflussen.

Dadurch, dass die Faservliese aus dem gleichen Material bestehen, ist eine Verbindung der einzelnen Fasern untereinander während dem Verpressen und Zusammenbacken begünstigt.

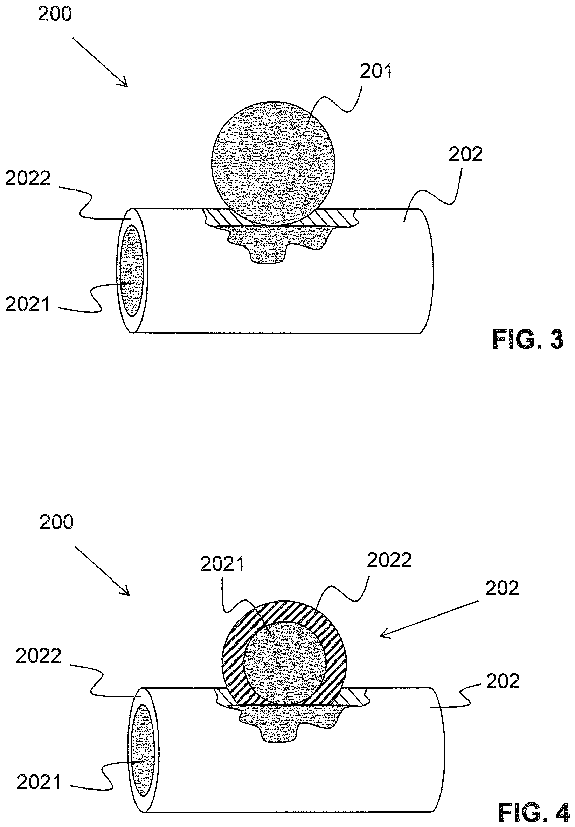

Die Figur 3 zeigt zwei sich berührende Fasern 200, wobei eine Faser eine Matrixfaser 201 und die andere eine Schmelzfaser 202 ist. Jede Schmelzfaser weist einen Faserkern 2021 und einen Fasermantel 2022 auf, wobei der Faserkern einen höheren Schmelzpunkt aufweist als der Fasermantel. Der Schmelzpunkt des Faserkerns 2021 ist demjenigen der Matrixfaser 201 ähnlich. Der Faserkern 2021 der Schmelzfaser kann das gleiche Material wie die Matrixfaser 201 aufweisen.

Die dargestellten Fasern können dem gleichen oder zwei benachbarten Fasermatten bzw. - vliesen angehören. Durch die äussere Wärmeeinwirkung auf die einzelnen Fasern 200 wird der Mantel 2022 der Schmelzfasern bis über den Schmelzpunkt des Mantelmaterials erwärmt. Gleichzeitig werden die Fasern der Fasermatten zusammengedrückt und miteinander verpresst. Wie in der Figur 3 dargestellt, wird das plastische Mantelmaterial durch die Matrixfaser 201 verdrängt, bis die Matrixfaser 201 auf das Kernmaterial der Schmelzfaser trifft. Das Verdrängen des Mantelmaterials resultiert in einer Vergrösserung der Kontaktfläche, was für die Festigkeit der Verbindung vorteilhaft ist.

Die Figur 4 zeigt zwei sich berührende Fasern 200 einer Fasermatte nicht gemäss einem Ausführungsbeispiel nach der Erfindung, wobei beide Fasern Schmelzfasern 202 mit einem Faserkern 2021 und einem Fasermantel 2022 sind. Da sich beim Erwärmen die Fasermäntel 2022 beider Schmelzfasern 202 erweichen, wird das Mantelmaterial beider Schmelzfasern beim Zusammendrücken solange verdrängt, bis die beiden Faserkerne aufeinandertreffen. Da beim Verpressen zweier Schmelzfasern das Mantelmaterial beider Fasern verdrängt wird, ergibt sich auch eine grössere Kontaktfläche im Vergleich zur resultierenden Kontaktfläche bei der Verschmelzung einer Matrixfaser mit einer Schmelzfaser.

Beim Abkühlen verfestigen sich das Mantelmaterial der Schmelzfaser wieder. Die Fasern erhalten so ihre ursprüngliche Festigkeit zurück und die durch das Verpressen und Backen geschaffenen Verbindungsstellen weisen vorzugsweise die gleiche Festigkeit wie der Rest der Fasern auf.

Die beim Verpressen, beispielsweise Vernadeln, und Zusammenbacken entstandenen Verbindungen zwischen den einzelnen Fasern innerhalb einem Faservlies bzw. zweier benachbarten Faservliesen schränken die Bewegungsfreiheit der Fasern ein und bewirken eine erhöhte Festigkeit bzw. Steifigkeit jeder Vliesschicht bzw. jedem Verbund von Vliesschichten.

Bei einer Platte mit Filzoptik werden die verpressten und gebackenen Platten ohne zusätzliche Deckschricht eingesetzt. Diese Platten sind dann auch ohne Belegung eingenstabil.

Die erfindungsgemässe schalldämmende Platte stellt ein selbsttragendes Element zur Verfügung, welches insbesondere für den Möbel- und Hausbau einsetzbar ist.

### BEZUGSZEICHENLISTE

| | | | |
|---|---|---|---|
| 10 | Platte | 22 | zweites Faservlies |
| 20 | Faservlies | 23 | drittes Faservlies |
| 200 | Faser | 24 | viertes Faservlies |
| 201 | Matrixfaser | 30 | erste Furnierplatte |
| 202 | Schmelzfaser | 31 | erstes Loch |
| 2021 | Faserkern | 35 | zweite Furnierplatte |
| 2022 | Fasermantel | 36 | zweites Loch |
| 21 | erstes Faservlies | | |

## Patentansprüche

1. Schalldämmende Platte (10) mit einer aus einem offenporig porösen Material gebildeten Absorptionsschicht aus einer Faserplatte (20), die eine verpresste und zusammengebackene Fasermatte (21, 22, 23, 24) aufweist, wobei zumindest ein Teil der Fasern (200) der Fasermatte (21, 22, 23, 24) aus kunststoffbeschichteten Schmelzfasern (202) mit einem Faserkern (2021) und einem Fasermantel (2022) besteht und das Material des Faserkerns (2021) einen höheren Schmelzpunkt als das Material des Fasermantels (2022) aufweist, wobei die Faserplatte (20) aus mindestens zwei Fasermatten (21, 22, 23, 24) besteht, wobei jede Fasermatte neben den besagten Schmelzfasern (202) Matrixfasern (201) aufweist,
wobei die Schmelzfasern (202) aus einem Kern aus PET und einem Mantel aus Co-PET bestehen,
wobei die mindestens zwei Fasermatten zu einer Fasermatteneinheit zusammengesetzt sind, **dadurch gekennzeichnet, dass** die mindestens zwei Fasermatten jeweils ausschließlich aus einem thermoplastischen Kunststoff bestehen, bei dem es sich um PET handelt, dass die Matrixfasern (201) aus PET bestehen und der Faseranteil der Matrixfasern zwischen 20 und 60 Gewichtsprozent beträgt, und dass die Dicke der mindestens zwei Fasermatten (21, 22, 23, 24) in der Fasermatteneinheit jeweils zwischen 5 und 25 Millimeter liegt und dass die Dicke der zusammengesetzten Fasermatteneinheit zwischen 30 und 120 Millimeter beträgt, welche Fasermatteneinheit nach dem Verpress- und Backschritt auf eine Faserplatte (20) zwischen 15 und 35 Millimeter Dicke gebracht ist.

2. Platte (10) nach Anspruch 1, **dadurch gekennzeichnet, dass** der Faseranteil der Matrixfasern zwischen 25 und 40 Gewichtsprozent beträgt.

3. Platte (10) nach Anspruch 1 oder 2, **dadurch gekennzeichnet, dass** die Faserplatte (20) auf einer oder beiden flächigen Seiten mit einer Beschichtung und/oder Belegung mit einem eine offene Oberfläche aufweisendes Material, wie insbesondere textile Stoffen oder luftpermeablen Membranen und Platten, versehen ist.

4. Platte (10) nach einem der Ansprüche 1 bis 3, **dadurch gekennzeichnet, dass** die Faserplatte (20) auf einer oder beiden flächigen Seiten mit einem mikroperforierten Laminat (30, 35) belegt ist, welches mikroperforierte Löcher (31) aufweist.

5. Platte (10) nach einem der vorstehenden Ansprüche, **dadurch gekennzeichnet, dass** drei bis fünf Fasermatten (21, 22, 23, 24) von beispielsweise einer jeweiligen Dicke von 5, 10, 15, 20 oder 25 Millimetern verwendet werden; insbesondere Fasermatten verschiedener Dicke.

6. Platte (10) nach einem der vorstehenden Ansprüche, **dadurch gekennzeichnet, dass** die Dicke der Abfolge von aufeinander liegenden unverpressten Fasermatten (21, 22, 23, 24) auf eine gefestigte Platte (20) mit zwischen einem Viertel und der Hälfte der Dicke durch Verpressen und Backen reduziert ist.

7. Platte (10) nach einem der vorstehenden Ansprüche, **dadurch gekennzeichnet, dass** die Fasermatten (21, 22, 23, 24) bei einer Temperatur von zwischen 100 und 240 Grad Celsius und einem Druck zwischen 4 und 6 bar verpresst und gebacken werden.

8. Verfahren zur Herstellung einer schalldämmenden Platte (10) nach einem der vorstehenden Ansprüche, **dadurch gekennzeichnet, dass** mindestens zwei Fasermatten aus einem thermoplastischen Kunststoff bestehend, jede Fasermatte neben Schmelzfasern aus einem Kern aus PET und einem Mantel aus Co-PET Matrixfasern aus PET aufweisend, der Faseranteil der Matrixfasern zwischen 20 und 60% betragend, vorzugsweise eine Abfolge von mindestens drei, vorzugsweise mindestens 5, Fasermatten (21, 22, 23, 24) mit einer Dicke von jeweils zwischen 5 und 25 Millimeter zu einer Fasermatteneinheit zusammengesetzt werden, dass die Dicke der zusammengesetzten Fasermatteneinheit zwischen 30 und 120 Millimeter beträgt und dass die Fasermatteneinheit nach dem Zusammensetzen, verpresst und anschliessend oder zeitgleich zusammengebacken auf eine Faserplatte (20) zwischen 15 und 35 Millimeter Dicke gebracht wird.

9. Verfahren nach Anspruch 8, **dadurch gekennzeichnet, dass** die Fasermatten bei einer Temperatur von zwischen 100 und 240 Grad Celsius und einem Druck zwischen 4 und 6 bar verpresst und gebacken werden.

10. Verfahren nach Anspruch 8 oder 9, **dadurch gekennzeichnet, dass** in dem Verpress-und Backschritt die sich ergebende Faserplatte (20) auf eine Dicke zwischen einem Viertel und der Hälfte der Dicke der ursprünglichen Fasermatten eingestellt wird.

11. Verfahren nach einem der Ansprüche 8 bis 10, **dadurch gekennzeichnet, dass** die Faserplatte (20) nachfolgend auf einer oder beiden flächigen Seiten mit einer Beschichtung und/oder Belegung mit einem eine offene Oberfläche aufweisendes Material, wie insbesondere textile Stoffen oder luftpermeablen Membranen und Platten, oder mit einem mikroperforierten Laminat (30, 35), welches mikroperforierte Löcher (31) aufweist, versehen wird.

## Claims

1. A sound-absorbing panel (10) comprising an absorption layer formed of an open-pored porous material of a fibreboard (20) comprising a compressed and baked fibre mat (21, 22, 23, 24), wherein at least a part of the fibres (200) of the fibre mat (21, 22, 23, 24) being made of plastic-coated melt fibres (202) having a fibre core (2021) and a fibre sheath (2022), and the material of the fibre core (2021) having a higher melting point than the material of the fibre sheath (2022), the fibreboard (20) being made of at least two fibre mats (21, 22, 23, 24), wherein that each fibre mat comprises matrix fibres (201) in addition to the said melt fibres (202), wherein the melt fibres (202) consist of a core of PET and a sheath of co-PET, wherein the at least two fibre mats are assembled to form a fibre mat unit, **characterized in that** the at least two fibre mats are each made solely of a thermoplastic material which is PET, **in that** the matrix fibres (201) consist of PET and the fibre content of the matrix fibres is between 20 and 60% by weight and **in that** the thickness of the at least two fibre mats (21, 22, 23, 24) in the fibre mat unit is between 5 and 25 millimetres each and **in that** the thickness of the assembled fibre mat unit is between 30 and 120 millimetres, which fibre mat unit is brought to a fibreboard (20) between 15 and 35 millimetres thick after the pressing and baking step.

2. The panel (10) according to claim 1, **characterized in that** the fibre content of the matrix fibres is between 25 and 40 percent by weight.

3. The panel (10) according to claim 1 or 2, **characterized in that** the fibreboard (20) is provided on one or both flat sides with a coating and/or covering with a material having an open surface, such as in particular textile fabrics or air-permeable membranes and sheets.

4. The panel (10) according to any one of claims 1 to 3, **characterized in that** the fibreboard (20) is covered on one or both flat sides with a microperforated laminate (30, 35) having microperforated holes (31).

5. The panel (10) according to one of the preceding claims, **characterized in that** three to five fibre mats (21, 22, 23, 24) of, for example, a respective thickness of 5, 10, 15, 20 or 25 millimetres are used; in particular fibre mats of different thickness.

6. The panel (10) according to one of the preceding claims, **characterized in that** the thickness of the succession of unpressed fibre mats (21, 22, 23, 24) lying one on top of the other is reduced to a consolidated panel (20) with between a quarter and half of the thickness by pressing and baking.

7. The panel (10) according to one of the preceding claims, **characterized in that** the fibre mats (21, 22, 23, 24) are pressed and baked at a temperature of between 100 and 240 degrees Celsius and a pressure of between 4 and 6 bar.

8. A method of manufacturing a sound-insulating panel (10) according to one of the preceding claims, **characterized in that** at least two fibre mats consisting of a thermoplastic material, each fibre mat comprising, in addition to melt fibres consisting of a core of PET and a sheath of co-PET, matrix fibres of PET, the fibre content of the matrix fibres being between 20 and 60%, preferably a succession of at least three, preferably at least five, fibre mats (21, 22, 23, 24) each having a thickness of between 5 and 25 millimetres are assembled to form a fibre mat unit, **in that** the thickness of the assembled fibre mat unit is between 30 and 120 millimetres, and **in that**, after assembly, the fibre mat unit is pressed and subsequently or simultaneously baked together and placed on a fibreboard (20) having a thickness of between 15 and 35 millimetres.

9. The method according to claim 8, **characterized in that** the fibre mats are pressed and baked at a temperature of between 100 and 240 degrees Celsius and a pressure of between 4 and 6 bar.

10. The method according to claim 8 or 9, **characterized in that** in the pressing and baking step the resulting fibreboard (20) is adjusted to a thickness between a quarter and a half of the thickness of the original fibre mats.

11. The method according to one of claims 8 to 10, **characterized in that** the fibreboard (20) is subsequently provided on one or both flat sides with a coating and/or covering with a material having an open surface, such as in particular textile fabrics or air-permeable membranes and sheets, or with a microperforated laminate (30, 35) having microperforated holes (31).

## Revendications

1. Panneau d'isolation acoustique (10) comprenant une couche d'absorption formée d'un matériau poreux à pores ouverts d'un panneau de fibres (20) comprenant un matelas de fibres comprimées et cuites (21, 22, 23, 24), dans lequel au moins une partie des fibres (200) du matelas de fibres (21, 22, 23, 24) constitué de fibres fondues (202) revêtues de matière plastique, avec un noyau de fibres (2021) et une gaine de fibres (2022), le matériau du noyau de fibres (2021) ayant un point de fusion plus élevé que le matériau de la gaine de fibres (2022), le panneau de fibres (20) étant constitué d'au moins deux matelas de fibres (21, 22, 23, 24), dans lequel chaque matelas de fibres comporte des fibres de matrice (201) en plus desdites fibres fondues (202), les fibres fondues (202) étant constituées d'un noyau en PET et d'une gaine en co-PET, où les au moins deux matelas de fibres sont assemblés pour former une unité de matelas de fibres, **caractérisé en ce que** les au moins deux matelas de fibres sont constitués chacun uniquement d'une matière thermoplastique qui est du PET, **en ce que** les fibres de matrice (201) sont constituées de PET et la teneur en fibres des fibres de matrice est comprise entre 20 et 60% en poids, et **en ce que** l'épaisseur des au moins deux matelas de fibres (21, 22, 23, 24) dans l'unité de matelas de fibres est comprise entre 5 et 25 millimètres chacun et que l'épaisseur de l'unité de matelas de fibres assemblé est comprise entre 30 et 120 millimètres, laquelle unité de matelas de fibres est amenée, après l'étape de pressage et de cuisson, à un panneau de fibres (20) d'une épaisseur comprise entre 15 et 35 millimètres.

2. Panneau (10) selon la revendication 1, **caractérisé en ce que** la teneur en fibres des fibres de la matrice est comprise entre 25 et 40 % en poids.

3. Panneau (10) selon la revendication 1 ou 2, **caractérisé en ce que** le panneau de fibres (20) est pourvu sur une ou deux faces planes d'un revêtement et/ou d'une couverture avec un matériau ayant une surface ouverte, comme en particulier des tissus textiles ou des membranes et feuilles perméables à l'air.

4. Panneau (10) selon l'une quelconque des revendications 1 à 3, **caractérisé en ce que** le panneau de fibres (20) est recouvert sur un ou deux côtés plats d'un stratifié microperforé (30, 35) ayant des trous microperforés (31).

5. Panneau (10) selon l'une quelconque des revendications précédentes, **caractérisé en ce que** l'on utilise trois à cinq matelas de fibres (21, 22, 23, 24) d'une épaisseur respective de 5, 10, 15, 20 ou 25 millimètres, par exemple ; en particulier des matelas de fibres d'épaisseur différente.

6. Panneau (10) selon l'une quelconque des revendications précédentes, **caractérisé en ce que** l'épaisseur de la succession de matelas de fibres (21, 22, 23, 24) superposées et non pressées est réduite à un panneau consolidé (20) ayant entre un quart et la moitié de l'épaisseur par pressage et cuisson.

7. Panneau (10) selon l'une quelconque des revendications précédentes, **caractérisé en ce que** les matelas de fibres (21, 22, 23, 24) sont pressées et cuites à une température comprise entre 100 et 240 degrés Celsius et à une pression comprise entre 4 et 6 bars.

8. Procédé de fabrication d'un panneau d'isolation acoustique (10) selon l'une quelconque des revendications précédentes, **caractérisé en ce qu'**au moins deux matelas de fibres constituées d'une matière thermoplastique, de préférence une succession d'au moins trois, de préférence au moins cinq, matelas de fibres (21, 22, 23, 24) d'une épaisseur comprise entre 5 et 25 millimètres, sont assemblés pour former une unité de matelas de fibres, où chaque matelas de fibres comprenant, outre des fibres fondues constituées d'une âme en PET et d'une gaine en co-PET, des fibres de matrice en PET, la teneur en fibres des fibres de matrice étant comprise entre 20 et 60%, **en ce que** l'épaisseur de l'unité de matelas de fibres assemblée est comprise entre 30 et 120 millimètres, et **en ce que**, après l'assemblage, l'unité de matelas de fibres est pressée et ensuite ou simultanément cuite et placée sur un panneau de fibres (20) d'une épaisseur comprise entre 15 et 35 millimètres.

9. Procédé selon la revendication 8, **caractérisé en ce que** les matelas de fibres sont pressés et cuits à une température comprise entre 100 et 240 degrés Celsius et à une pression comprise entre 4 et 6 bars.

10. Procédé selon la revendication 8 ou 9, **caractérisé en ce que** dans l'étape de pressage et de cuisson, le panneau de fibres résultant (20) est ajusté à une épaisseur comprise entre un quart et la moitié de l'épaisseur des matelas de fibres d'origine.

11. Procédé selon l'une quelconque des revendications 8 à 10, **caractérisé en ce que** le panneau de fibres (20) est ensuite pourvu sur une ou deux faces planes d'un revêtement et/ou d'une couverture avec un matériau ayant une surface ouverte, comme en particulier des tissus textiles ou des membranes et des feuilles perméables à l'air, ou avec un stratifié microperforé (30, 35) ayant des trous microperforés (31).
